# EUROPEAN PATENT SPECIFICATION

(11) **EP 1 311 080 B1**
(45) Date of publication and mention of the grant of the patent: **16.03.2005**
(21) Application number: 01440377.8
(22) Date of filing: 09.11.2001
(51) Int. Cl.: H04J 3/08, H04J 3/16

(54) **Method and apparatus for chained operation of SDH boards**
Verfahren und Vorrichtung zur verketteten Benutzung von SDH Karten
Méthode et l'appareil pour le fonctionnement enchaîné des cartes SDH

(43) Date of publication of application: 14.05.2003
(73) Proprietor: EVOLIUM S.A.S., 75008 Paris (FR)
(72) Inventor: Blorec, Gwendal, 75014 Paris (FR); Ly, Muy-Chu, 91120 Palaiseau (FR)
(74) Representative: Urlichs, Stefan, Dipl.-Phys.

(56) References cited:
- EP-A- 0 891 067
- EP-A- 0 905 936
- US-A- 5 327 427
- US-A- 6 128 321
- ANDREWS M ET AL: "BT NORTHERN IRELAND STAR SDH NETWORK NISTAR" BRITISH TELECOMMUNICATIONS ENGINEERING, BRITISH TELECOMMUNICATIONS ENGINEERING. LONDON, GB, vol. 12, no. PART 3, 1 October 1993 (1993-10-01), pages 207-215, XP000405932 ISSN: 0262-401X

## Description

### Field Of The Invention

The present invention relates to communications environment components for data traffic communications. In particular, the present invention relates to communications environment components, such as boards, operated as chain for data traffic in a communications environment.

### Background Of The Invention

The increasing extent of telecommunications, and in particular the increasing amount of data traffic and the increasing number of participating systems and devices require an enhanced performance of hardware interfaces for connecting different systems and devices and for communicating data traffic. Particularly in the field of 2G and 3G, as traffic is expected to increase in a dramatic fashion, operators of telecommunications environments require efficient high performance equipment.

In order to fulfill this demand, an available hardware interface has been usually replaced by newly developed and designed hardware interfaces of enhanced performance and capacity.

This approach is costly, time consuming and not flexible for accommodating the fast changing requirements of telecommunications environments. For example, in the case of mobile telecommunications environments employing standards according to the Plesiosynchronous Digital Hierarchy (PDH), base station systems (BSS) utilize packet control units (PCU) offering E1 interfaces having data traffic rates of 2 Mb/s. An example for such a packet control unit is the so-called Multi-BSS Fast Packet Server (MFS) by Alcatel for processing data flows and communicating voice flows.

In order to enhance the performance for data communications, e.g. to support higher rates such as used according to the Synchronous Digital Hierarchy (SDH), special devices for data communication and distribution such as a PCU including higher-capacity boards have been provided.

In general this approach has several disadvantages which are more evident in cases where such a device (e.g. PSUs) is intended to maintain a support of lower data traffic rates and to additionally support higher data traffic rates. For example, the higher data traffic rates are supported with respect to a part of an communications environment, e.g. an outside network external to the device, while the lower data traffic rates are supported internal of the device or with respect to another part of the communications environment.

As result of this approach, both component supporting higher and lower data traffic rates are provided by the high capacity device although the support of lower date rates could be performed by the respective previous device having a relative lower capacity. Thus, components of the previously used lower capacity device are also replaced by respective components of the higher capacity device.

US Patent number 5,327,427 discloses a self-healing meshed network using logical ring structures which can withstand a cut communication path or a failed node. A logical link is formed by a cascade of physical hybrid ring segments, each composed of a pair of unidirectional communication path propagating multiplexed sub-channels and interposed add-drop multiplexed nodes and cross connect nodes terminating the segments.. Each cross connect nodes routes and incoming sub-channel from one segment to an outgoing sub-channel on another segment.

### Object Of The Invention

Therefore, there is a demand for a solution which avoids a complete replacement of lower capacity devices by devices of higher capacities and which allows to further employ at least components of the lower capacity devices for supporting higher data traffic rates. This demand includes the need for respective arrangements and solutions necessary to operate such arrangements.

### Solution According To The Invention

The basic idea underlying the present invention is to operate a data communications device serving as a data traffic interface, such as a packet control unit or packet server, e.g. originally used according to PDH such that components thereof, e.g. boards, having a lower performance, e.g. data rate, are cooperatively operated to support a desired higher performance. In particular, higher load due to the higher performance to be achieved are distributed to components which are not capable to support the higher load on their own.

In detail, the present invention teaches to operate boards of such a data traffic interface device as a chain of boards, wherein boards of the chain share data traffic processing load required for a desired higher data traffic performance.

As an example, the present invention allows to operate boards of a PDH packet server originally supporting E1 interfaces of 2 Mb/s as a board chain providing SDH interfaces, e.g. STM-1, with data traffic rates of 140 Mb/s and higher.

According to the present invention, such boards and components thereof are configured and initialized as chain such that data traffic having a high data rate flows through and is processed by this chain. In particular, no order in the chain and no rule in linking boards are pre-supposed.

Further, the present invention includes solutions to operate such chained boards since conventional measures for operation can not be applied.

For example, a conventional approach to detect failures for single boards or single boards not being arranged according to the invention, i.e. as chain, is an active failure detection by the equipment manager. In addition, the boards are regularly monitored and considered as faulty when a presence request is not answered in a pre-defined time.

Whereas a fault only impacts on one board in the single board case, a fault in a chain will very likely impact all boards in the involved chain. In the case of SDH, this most certainly leads to dramatic effects on the overall traffic, as up to a 155 Mb/s load may disappear due to a single fault.

Conventional fault detection as done for single boards is performed via timers that are too long for SDH. For example, in the case of failure of an optical link, the G783 ITU-T standard requires the APS procedure to terminate in less than 50 ms.

A further problem of known solutions is that, in general, a plurality and in particular cascades of alarms from several boards in response to a single failure will overload the system operator, both human and technical operators.

In this context, the present invention teaches to detect faults of boards forming a chain on the basis of correlations between alarms from the chain and failures of the chain.

In order to maintain the operability of chained boards upon a fault detection for the chain, the present invention teaches to heal failures of the chain by means of an at least N+1 redundancy. According to the present invention, a N+1 redundancy can obtained by at least one of a modification of the data traffic through the chain and a spare board which is included in the chain to compensate failed chain elements. For higher redundancies, further spare boards are contemplated.

### Brief Description Of The Invention

On the basis of the above underlying basic idea the present invention provides a method for supporting different data rates in a telecommunications environment, comprising providing at least two units, each unit being capable of supporting a predefined low data rate via a low data rate interface, linking the at least two units to form a chain through which data traffic of a high data rate is to be routed such that capacities required to support the high data rate for internal data traffic are cooperatively provided by the at least two units.

For receiving high data rate data traffic, at least one of the at least two units is provided with an interface supporting the high data rate wherein the at least one high data rate interface is operated to receive external data traffic having the high data rate. Thus, the at least one high data rate interface forms the beginning of the chain.

For outputting high data rate date traffic, at least one of the at least two units is provided with an interface supporting the high data rate wherein the at least one high data rate interface is operated to output the internal data traffic having the high data rate. Thus, the at least one high data rate interface forms the end of the chain.

Further, it is possible to operate at least one of the low data rate interfaces such that at least one of outputting data traffic having the low data rate obtained from the internal data traffic having the high data rate and receiving external data traffic having the low data rate is performed. As a result, the data traffic through the chain can be considered as a bus for high data rate traffic.

For example, an automatic chaining of the at least two units can be obtained by initializing the at least two units according to the capacities required for the high data rate to cooperatively support the internal data traffic. This can be complemented by detecting the at least one high data rate interface forming least one of the beginning and the end of the chain.

A detection of failures for the chained boards can be based on correlations defined for failures of the chain and alarms generated by the at least two units. In response to at least one alarm from the at least two units it is possible to determine a current failure of the chain on the basis of the defined correlations.

A faster failure detection can be accomplished by determining the current failure on the basis of the defined correlations by excluding alarms for which no correlations to failures are defined.

When the at least one alarm is not sufficient to determine the current failure it is contemplated to receive at least one further alarm from the at least two units. The receipt of the at least one further alarm can be in response to an error information communicated by one of the at least two units, following a request communicated to the at least two units or other alarm communications. Then, the current failure is determined on the basis of the defined correlations for the at least one alarm and the at least one further alarm.

Moreover, it is possible to define at least one of the at least two units as susceptible to generate at least one further alarm subsequent to the at least one alarm. The defined of the at least two units is monitored or checked if the at least one alarm is not sufficient to determine the current failure. In response to a receipt of at least one further alarm from the defined of the at least two units, the current failure is specified on the basis of the defined correlations for the at least one alarm and the at least one further alarm.

Healing of failures for the chained units according to the invention can be accomplished by detecting a current failure for the chain, determining a failed chain element associated to the current failure, and healing the current failure by at least one of reversing the direction of data traffic flow through the chain; including a further unit in the chain and operating the included further unit to replace the failed chain element; and removing one of the at least two units from the chain, the removed unit being the failed chain, including a further unit in the chain and operating the included further unit to replace the removed unit.

In a similar manner, further current failures for the chain subsequent to a healed current failure can be healed by determining a further failed chain element and including another further unit in the chain and operating the included another further unit to replace the further failed chain element and/or removing another of the at least two units from the chain, the another removed unit being the further failed chain element including a another further unit in the chain and operating the included another further unit to replace the another removed unit.

An enhanced healing of failures includes a compensation of further failures subsequent to already healed failures by means of units currently employed for the already healed failure. Upon a subsequent failure for the chain, a respective failed chain element is identified. Here, a distance of the previously failed chain element and the subsequent failed chain element is determined in view of the arrangement of the at least two units in the chain.

A healing of the subsequent failure can be performed if the determined distance is below a predefined measure. Such a healing can comprise including a another further unit in the chain and operating the included another further unit to replace the further failed chain element; and removing another of the at least two units from the chain, the another removed unit being the further failed chain element, including a another further unit in the chain and operating the included another further unit to replace the another removed unit.

In particular, current failures can be determined on the basis of alarms from neighboring chain elements.

Moreover, the present invention provides devices and systems being adapted and programmed and/or having means to carry out the above steps.

Furthermore, the solution according to the present invention can be achieved by a computer program product having program code portions for carrying out the steps of one of the above described metals.

### Brief Description Of The Figures

In the following description of preferred embodiments of the present invention it is referred to the accompanying drawings wherein:
- Fig. 1: schematically illustrates a telecommunications environment used for the present invention,
- Fig. 2: schematically illustrates an embodiment according to the present invention,
- Fig. 3: schematically illustrates a board used for the embodiment of fig. 2,
- Fig. 4: schematically illustrates a data traffic flow according to the present invention through a chain of boards of fig. 3, and
- Fig. 5: schematically illustrates a failure condition for the embodiment of the present invention as shown in figs. 2 to 4.

### Description Of Preferred Embodiments

In the following, the invention will be exemplarily described with reference to telecommunications environments employing the standards for Synchronous Digital Hierarchy (SDH). Since SDH is well known in the art, detailed descriptions related to SDH are refrained from.

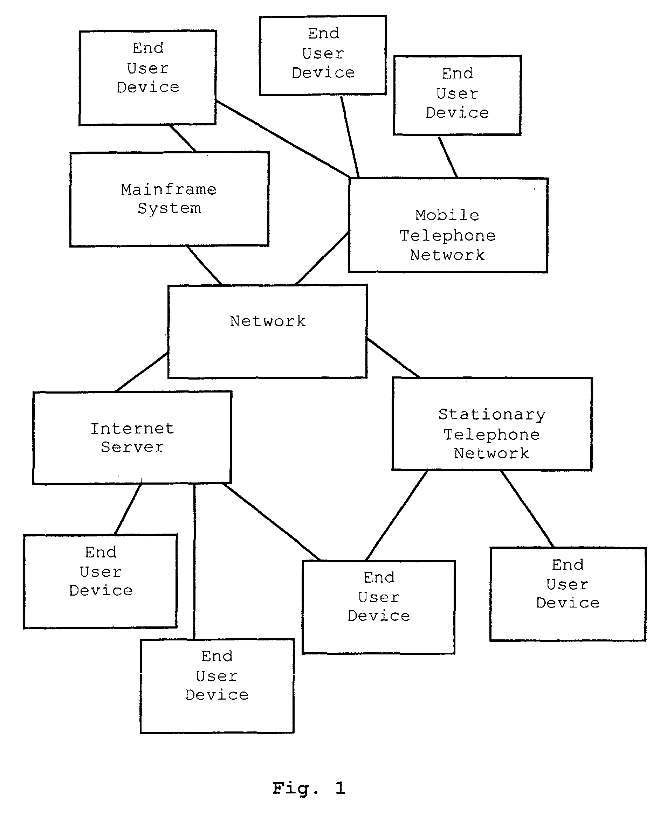

Referring to Fig. 1, a telecommunications environment comprises a network for data communications with other networks (e.g. mobile and stationary telephone networks), end user devices (e.g. telephones, computer systems), communications systems (e.g. Internet servers), and the like. For data communications, different parts of the telecommunications environment are linked via hardware interfaces. In the case of SDH such interfaces are formed by a device providing SDH interfaces.

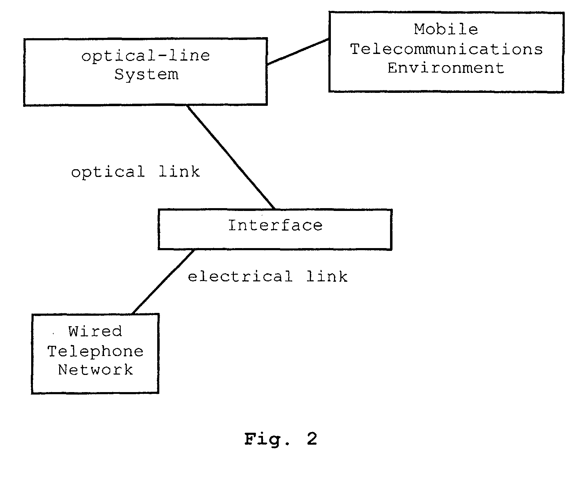

Fig. 2 shows, as an example, such an interfacing device for linking a mobile telephone environment and a terminal associated to a wired telephone environment. The mobile telephone environment is connected to the interfacing device by an optical-line system providing input and output functions for data communications to and from mobile telephone environment. In detail, the optical-line system comprises an optical port which is connected to an optical port of the board. An electric port of the board is connected to a terminal of the wired telephone environment for data communications.

### Chaining boards

A set of boards is installed in a device referred to as equipment including a rack or a set of sub-racks. The boards are located on slots of the rack (or sub-racks) which are 1-to-1 coded by numbers. Each board taken alone or several boards forming a group serving as single board are capable to support a predefined low data rate but not able to support a desired high data rate.

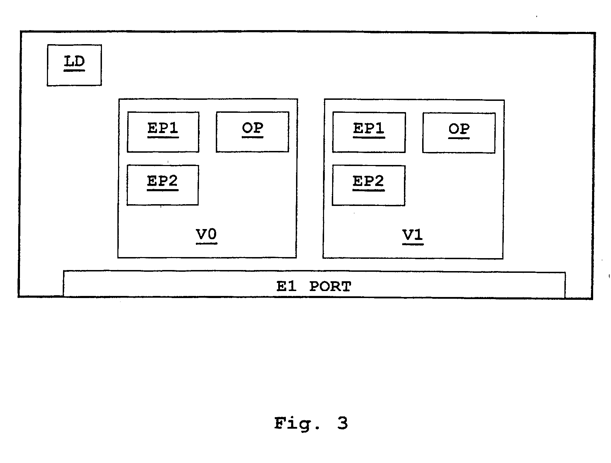

As illustrated in Fig. 3, each board comprises a laser diode LD used to communicate on an optical (STM-1) link to the outside network (or any other similar equipment targeted at this link). To this end, the boards are intended to support the high data rate data traffic which can be accomplished by arranging the boards as chain as set forth below.

Each board also comprises two framers (e.g. VC-4 framers), indicated by V0 and V1, each of them having two electrical ports EP1 and EP2 and an optical port OP, and a digital cross point switch DXS which connects both framers V0 and V1 to its electrical ports EP1, EP2 and 0P. Further, each board includes ports to be connected to slots of the equipment which are connected e.g. via a bus. To this end, the boards are adapted to support the low data rate data traffic due their above named low data rate properties.

For forming a chain of boards, a number of installed boards required to provide a desired data traffic processing is defined, e.g. including all boards of the equipment or at least two thereof. The specified boards are linked by means of a high-capacity link which supports the high data rate (e.g. an electrical STM-1 link). It has to be noted that no order of the boards in the chain and no rule in linking the boards are pre-supposed.

For linking two boards, a link is employed which connects one port of one board to one port of the other board. Thus, there are four ways of linking two boards. Linking may be restricted e.g. by procedure defined by the operator of the equipment, a linking scheme provided by the equipment manufacturer, and the like, or it may not restricted at all.

At least one extremity of the chain, i.e. at least one board arranged at one end of the chain, is connected to the outside network via its optical port OP for data traffic having the high data rate. The connection(s) to the external network form(s) a high data rate interface for the chained boards while connections by means of the equipment slots, e.g. to a bus, constitute a low data rate interface for the chained boards.

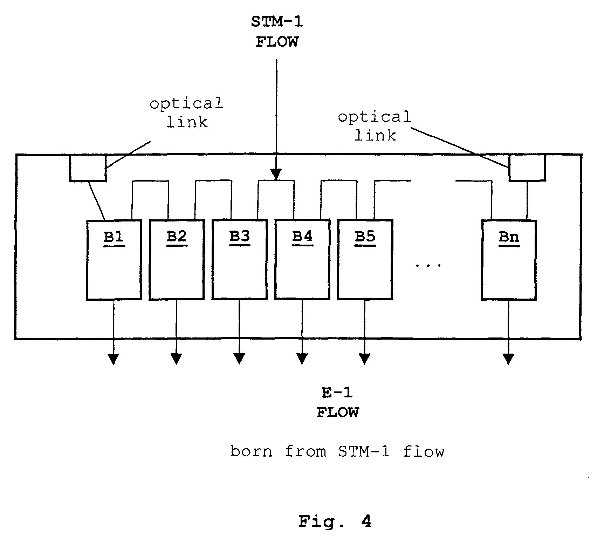

As a result, all boards are linked to one another, such that they form a chain which is connected to the outside network via the high data rate interface. High data rate data traffic flows through the chain such that load and in particular data traffic processing load is distributed to the boards of the chain. Thus, the high load can be controlled and processed although the boards taken alone originally have not been provided to support the high data rate. With respect to the low data rate interface, respective data traffic can be "born" from or "merged" into the high data rate data traffic through the chain, as illustrated in fig. 4. For example, the data traffic through the chain can be a STM-1 flow while data traffic communicated via the low rate interface can be an E1 flow.

### Initialization of chained boards

In the following it is described how the chain initialization of the boards and the configuration of components of each of the boards is accomplished such that high data rate data traffic flows through the chain. The initialization and configuration can be performed under control of a control unit (not shown) providing hardware and software functions.

By means of an automatic process, including trial-and-error and deduction from intermediary results, it is possible to identify the actual order of the boards in the chain, to determine linking or branching errors in the chain (e.g. a loop in the chain, missing or excess boards ), to initialize the chain and to configure each board such that data traffic may flow through the chain.

One aspect of this process is that each board will communicate to the board(s) preceding or following in the chain, data being indicative of the slot it is associated to and will receive, from the board(s) preceding or following in the chain, data being indicative of the slot(s) of the neighboring board(s).

As set forth above, the boards are connected with slots of the equipment, arranged to allow linking each other to form a chain (without a order pre-supposed for the chain) wherein one or two extremities thereof being linked to the outside network. This can be performed by the operator and/or the manufacturer of the equipment.

Further, the control unit is provided information of slots (slot list) representing boards expected to belong to the chain and information indicative of one or two API(s) (Application Programmers Interfaces) representing the extremities of the chain. This can accomplished e.g. directly by equipment operator/manufacturer, by a software equipment manager for the telecommunications environment, by data communications from the equipment and the like.

The control unit configures the DXSs of each board in the list such that each framer V0 is connected to the respective optical port OP and each framer V1 to is connected to the respective electrical port EP2.

For detecting the one or two connected extremities of the chain, the laser diodes LDs of each board in the list are activated. On the basis of the received information concerning the one or two APIs, each board in the list is checked whether a data signal from a laser diode LD is communicated (e.g. the J0 bytes received for the STM-1 case). This allows to detect the extremities of the chain.

Here it is possible to perform a first check via the received number of APIs. For example, linking or branching error might be existing in case one API is detected although the received API related information indicates two APIs, two instead of three, etc.

For the above described determination of the one or two extremities of the chain all laser diodes LD of the boards are activated at least for a short period. Depending on the power of the laser diodes LDs, technical properties of the optical link to the outside network, security requirements and the like, the activation of all laser diodes may thus be considered as inadequate. As an alternative, it is contemplated to only activate the one or two laser diodes LDs necessary to determine, by the control unit via the respective API, which of the boards is actually connected to the outside network. This limited laser diode activation can e.g. performed by the equipment operator manually or under control of hardware and/or software components of the equipment operator. Further, this can be accomplished by a configuration of the equipment and/or the boards, e.g. by the manufacturer or the equipment operator, in a manner such that laser diodes LDs connected to the outside are activated for example in response to putting the equipment in operation or to control data from the control unit.

In case the limited activation of laser diodes LDs would not be sufficient to determine the extremities of the chain, the extremities of the chain can be determined by an activation of laser diodes LDs of all boards, as explained before.

Having determined the one or two extremities of the chain connected to the outside network, the laser diodes LDs of each board in the list is de-activated which is no chain extremity, i.e. not connected to the outside network.

Following the DXSs on each board in the list representing no extremity of the chains are configured such that each framer V0 is connected to the respective electrical port EP1 and each framer V1 is connected to the respective electrical port EP2.

The control unit, receives or polls, respectively, from each board in the list, data indicative of each slot number to which board is associated to (e.g. the F1 byte in the STM-1 overhead received by each 7C-4 Framer for the STM-1 case).

On the basis of the above configuration of the DXSs and the information indicating the association of the boards to the slots of the equipment, the control unit obtains its "abstract view" of the actual chain of boards. For example, this building of the abstract view of the actual chain can performed through a comparison algorithm of board-slot-couples in a list.

Optional a re-rebuilding of the abstract view of the actual chain can be performed in case at least one of the extremities of the chain as determined above is still not connected to another board in the chain. Then, the DXS on the slot for the board representing the extremity in question is configured such that its framer V0 is connected to the respective optical port OP and its framer V1 to is connected to the respective electrical port E1.

Again on the basis of the above configuration of the DXSs and the information indicating the association of the boards to the slots of the equipment the control unit builds its "abstract view" of the actual chain of boards.

After having determined the actual chain, i.e. the board(s) serving as extremity(ies) of the chain for data communications with the external network, the order of the boards in the chain and the association of the boards to slots of the equipment, the control unit configures components of the boards present in the actual chain.

With respect to a synchronization of the boards and its components, the synchronization source for a board in the chain is on the side which is, along the chain, closest to the beginning of chain, i.e. the API for the chain extremity or the respective board connected to the outside network for input communications there from.

The process defined here is transparent, e.g. to the equipment operator and the software equipment manager. In particular, no rules for linking boards in the chain are necessary and, thus, the chain configuration becomes an automatic process. Depending on the requirements for the operation of the telecommunications environment, options chosen for operating the equipment and the like, this process can be stopped automatically or not in case an unexpected board is part of the chain, e.g. when the unexpected board in the chain does not affect the performance of the chain. Although it is not a prerequisite for this process, linking rules can be predefined and e.g. stored by the control unit. Then, the chain initialization and configuration process can be automatically stopped when a violation of linking rules would lead to an undesired operation or to a failure. Even if linking rules are violated, the process can be continued such that the equipment "heals" itself.

As a result, as shown in fig. 4, high data rate data traffic communicated to and from the external network flows through the boards of the chain wherein load is distributed to the chained boards according to the initialization and configuration. With respect to the low data rate interface, low data rate data traffic is "born" form the high data rate data traffic. Likewise, low data rate data traffic is "merged" into the high data rate data traffic. In particular, a board will process lower rate data traffic coming from lower rate ports or extracted from the higher rate data traffic coming from one of the higher rate ports. This processed data traffic will then be either terminated in the board, or forwarded to a lower rate port (the same or another), or inserted into a higher rate frame in order to be transferred through one of the higher rate ports. The higher rate data traffic can be seen as a bus which actually may transfer lower rate data traffic from one board to another. This is another, secondary, use of the chaining principle.

### Fault detection for chained boards

For a detection of faults or failures of boards arranged as a chain and board components, information is provided which characterizes slots of the equipment associated to boards belonging to the chain and the linking scheme used for the boards in the chain or the order of the boards in the chain, respectively. Further, information is provided being indicative which board forms the beginning of the chain. In case two boards are connected to the outside network, further information is provided which board(s) form(s) the end(s) of the chain.

Such chain information for the control unit in order to perform a fault detection for chained boards can be obtained by the above described chain initialization. As an alternative, such information can be provided from the equipment or its operator. Advantageously, the control unit stores chain information or has access to storage devices supplying sufficient chain information.

Alarms are raised by the boards upon a fault and forwarded to the control unit. On the basis of alarm levels e.g. as defined for SDH, information indicating from which board and/or from which component thereof an alarm originates and chain information, the control unit is enabled to correlate faults from the alarms.

The basic idea is to define types of faults of the chain, for each fault the number and optionally the sequence of alarms to be expected and for each fault which board or boards will raise alarm(s), e.g. expected subsequent alarms including any kind of side alarms, lower level alarms and the like that are raised as a result of a single alarm previously raised, e.g. when the single alarm exceeds a predefined level. The correlation takes in account the components of the board(s) reporting alarm(s) and alarm levels e.g. as defined for SDH.

In principle, fault conditions can be grouped in two categories, one wherein a single alarm, i.e. an alarm raised due a single event, is sufficient to actually detect and identify the underlying fault, the other wherein a single alarm is not sufficient.

For a single alarm being sufficient to perform a fault detection, the control unit correlates the current alarm to a respective fault, wherein it is contemplated to stop further monitoring of alarms.

In case a single alarm is not sufficient, the control unit waits until at least one further, subsequent alarm is raised, i.e. the occurrence of at least one further event or fault.

Further, the control unit may check for alarms expected to be raised subsequent to the first alarm.

Moreover, it is possible to employ specific, selected or all kinds of alarms resulting from a single alarm previously raised, e.g. when the single alarm exceeds a predefined level. On the basis of these alarms the control unit determines which alarms are of interest for a fault detection and monitors the respective events and boards or components thereof, respectively. For that purpose it is possible to filter alarms, e.g. by employing partial information obtained from primary or first alarms. As an example the first alarm provides information whether to check the board preceding or following the board from which the first alarm is originating.

Further, it is possible that alarms being expected to follow a first alarm are not reported or detected. Then, this situation itself can be considered as fault for which respective correlations can be defined with respect to the condition of the chain and its elements.

As examples, the following table lists faults and alarms used to correlate them together with observations concerning underlying events and configuration:

| **Fault** | **Events used to correlate the fault** | **Observations** |
|---|---|---|
| **External link for beginning of the chain failed (e.g. active optical link failed)** | LOS, LOF or AU-LOP detected by the first board in the chain (e.g. via the framer connected to the optical port). | Only one event needed. |
| **External network failed** | MS-AIS or AU-AIS detected by the first board in the chain (e.g. via the framer connected to the optical port). | Only one event needed. |
| **External link for end of the chain failed (e.g. passive optical link failed)** | LOS, LOF or AU-LOP detected by the last board in the chain (e.g. via the framer connected to the optical port). | Only one event needed. |
| | | Possible if the last board in the chain is connected to the outside network and configured. |
| **First board failed** | LOS, LOF or AU-LOP detected by the second board in the chain (via the framer connected to the first board through its electrical port). | Only one event needed. |
| | | The reception of the APS request is possible if the last board in the chain is connected to the outside network and configured. |
| | APS request via K1/K2 bytes received by the last board (via the framer connected to the optical port). | |
| **Last board failed** | LOS, LOF or AU-LOP detected by the board situated before in the chain (via the framer connected to the failed board through an electrical port); the control unit monitors the last board and finds out it does not answer. | Two events are needed. |
| **"In-between" board failed** | LOS, LOF or AU-LOP detected by the two boards surrounding the failed board (via the framers connected to it through their electrical ports). | Two events are needed. |
| | | The chronological order of the alarm events is not important. |
| **Internal link failed (e.g. electrical link failed)** | LOS, LOF or AU-LOP detected by the two boards surrounding the failed link 'via the framers connected to it through their electrical ports). | Two events are needed. |
| | | The chronological order of the alarm events is not important. |

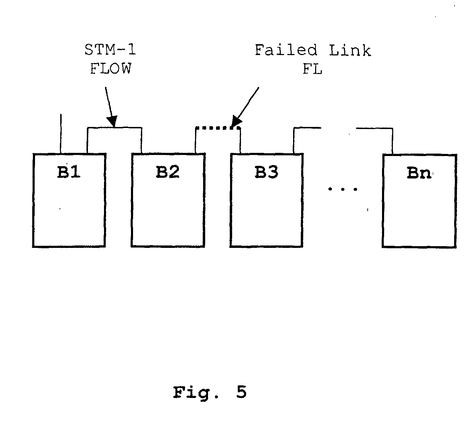

Fig. 5 illustrates an example of a fault detection for the case of a failed internal link. Due to a failure of an internal link between board B2 an board B3, i.e. failed link FL, framer V1 of board B2 and framer V0 of board B3 raise an alarm LOS. These alarms are correlated to the current fault, namely the failure of link FL. The thus detected fault or information being indicative thereof is provided, e.g. to the equipment operator, for maintenance or repair purposes or replacement of defect components.

In general, a failure in a board or a component thereof, respectively, is not partial, i.e. a failed board or component will not let traffic there through and will act as a block in the chain. For example, a failure in one of the framers V0 and V1 of a board will result in a complete failure of the board, and the failed board can be detected by means of alarms from the neighboring boards. Therefore, the above given correlation of alarms and faults and the resulting fault detection can be based on the assumption that a board raising an alarm is not the faulty or failed component.

For a case wherein the above assumptions can not be fully applied, e.g. if the failure of a component of a board does not lead to a complete failure of the board, the principle to detect faults on the basis of alarms raised by neighboring components can also be employed. Here, further alarms are considered and correlated in a similar manner to the above described correlation to faults. For example, a component of a board fails, neighboring components of the board will raise alarm which will be utilized to detect the underlying fault and to identify the failed component.

### Failure healing for chained boards

For a healing of failures of boards arranged as a chain and board components, information is provided which characterizes slots of the equipment associated to boards belonging to the chain and the linking scheme used for the boards in the chain or the order of the boards in the chain, respectively. Further, information is provided being indicative which board forms the beginning of the chain. In case two boards are connected to the outside network, further information is provided which boards forms the end of the chain.

Such chain information can be obtained by the above described chain initialization. As an alternative such information can be provided form the equipment or its operator. Advantageously, the control unit stores chain information or has access to storage device supplying sufficient chain information.

Further, information is provided indicating that a fault is existing, the type of fault and which of the boards is affected. This fault information can be obtain by the above described fault detection or by information provided from the equipment operator or any other suitable source such as a central unit (e.g. server, central computer system) for the telecommunications environment.

Upon a occurrence of a fault and on the basis of information indicating which kind of fault is present and which of the boards failed or is affected by the failure, an automatic "healing" is performed.

In dependence of the actual chain condition, measures for failure healing and re-establishing the operability of the chain include at least:
- Changing the direction of data flow through the chain,
- including a spare board in the chain, e.g. to replace a failed link between boards in the chain or to provide failed functionalities, and
- excluding a failed board by including a spare board.

The healing of faults can include a process wherein the direction of data traffic through the chain is reversed. In view of the utilized SDH, an APS (Automatic Protection Switching according to the SDH standard allowing to switch traffic from one (optical) active link to a passive link) is performed with respect to the board which previously formed the end of the original chain. If necessary for such a change of the data traffic direction, the synchronization configuration of each board in the chain also can be reversed, for example if a board takes its synchronization from the one preceding board it in the reversed chain. A reversing of synchronization also can be accomplished by utilizing respective measures as described for the above chain initialization.

Depending on the redundancy intended for the equipment, i.e. the number of faults or failed boards possible before the complete equipment fails, one, two, three or more spare boards are provided. In order to replace a failed board, the spare board is connected, in the context of this description electrically connected, to the remaining functioning boards such that the chain is formed in its intended original form. Such a connection can be e.g. obtained by coupling an electrical port of the each framer of the chained board to a bus incorporated in the equipment, usually implemented in the back-panel of the rack equipment.

If a link between boards in the chain failed, the spare board or one of the spare boards is activated to replace the failed data traffic line. In particular, the spare board will provide a transparent data traffic forwarding. In a comparable manner, the spare board or one of the spare boards can be integrated in the chain to provide functionalities previously available but currently not supported due to a failure, wherein the respective board is not necessarily replaced.

In case a failure occurs in one of the boards, the fault is "healed" by replacing the board which failed or includes a failed component by a operable spare board arranged as a backup means in the equipment.

The spare board or one of the spare boards is connected with the remaining functioning boards of the chain (which in fact is not chain anymore) such that the original chain is restored. For the case of a bus for connecting boards in the equipment, the replacing spare board is coupled to the bus and put in operation by a configuration of the DXS in the spare board. For example, the framers of the spare board each are previously connected to an electrical port for the bus which includes, for framers having two electrical port, a twin port. For coupling the spare boards with the remaining boards of the chain, the DXS of the board(s) surrounding the failed element has to be reconfigured so that the framer that previously was indirectly connected to the failed element is now indirectly connected to the spare board via the bus.

To configure the (spare) board now replacing the failed board, the configuration of the failed board is copied to the replacing board except for the DXS configuration of the failed board. The DXS configuration for the replacing board has to be adapted in dependence to the actual connection to the other boards and the bus. As an alternative, the configuration of the replacing board can be accomplished as described above with respect to a chain initialization for boards.

The following table shows, as an example for a N+1 redundancy, a list including faults and actions accordingly to be taken for chain healing together with observations concerning the resulting condition:

| **Fault** | **Actions** | **Observations** |
|---|---|---|
| **External link for beginning of the chain failed (e.g. active optical link failed).** | Reverse direction of the chain. | The last board is or has to be connected to the external network. |
| **First board failed and last board con- nected to the external network.** | Reverse direction of the chain. Reconfigure the spare board as the "first" board. | |
| | Connect the board that is now last in the chain to the spare board(e.g. via the bus). | |
| **First board failed and last board not connected to the external network.** | Do nothing. | The chain is totally failed. |
| **External network failed.** | Do nothing. | The chain is totally failed. |
| **External link for end of the chain failed (e.g. passive optical link failed).** | Do nothing. | Filtering out the relevant alarms (if necessary). |
| **Last board failed.** | Reconfigure the spare board as the last board. | |
| | Connect the board situated before in the chain to the spare board (e.g. via the bus). | |
| **"In-between" board failed** | Reconfigure the spare board as the failed board. | |
| | Connect the boards situated before and after the failed board in the chain to the spare board (e.g. via the bus). | |
| **Link between two boards failed (e.g. electrical link failed).** | Reconfigure the spare board as transparent. | |
| | Connect the boards situated before and after the failed link in the chain to the spare board (e.g. via the bus). | |

### Enhanced failure healing for chained boards

The above failure healing is somewhat restricted to single failures in case of a single spare board providing a N+1 redundancy. More than a single failure can be compensated by a higher redundancy for which more than one spare board is employed. Practically, it is desired to cope with more than one failure while keeping the number of spare boards small, preferably to utilize only a single spare board. This can be accomplished by an enhanced failure healing for chained boards as set forth below.

The principle is to control whether a former spare board already included in the chain and possibly replacing a failed board of the original chain is sufficient to heal a further failure subsequently occurring. Since the former spare board is now a component of the actual chain and, thus, integrated at a specific part of the chain, for the case of boards used here, the former spare board is in general limited to heal failures of neighboring chain sections, e.g. neighboring links or boards. In particular, this limitation is due to the number of connections and links possible to and from the assumed boards. For example, a board provided as a spare board and now being included in the chain provides a wider capability of establishing links and connections to at least one of the bus and other boards in the chain, enhanced failure healing is possible to failures of any chain parts and sections.

Assuming a first failure has been healed by including a board provided as spare board, thereby replacing e.g. a failed link or board, and a second failure follows, it is checked whether the second failure is existing for a chain component or section neighboring the former spare board now forming a part of the chain.

The failure is evaluated with respect to the available performance of the included board, i.e. its capability and functionality not being required to heal the first failure or which can be utilized without effecting the first failure healing. That means it has to be proven that the included board is sufficient to heal both the first failure and the second failure.

In case of a positive result, the included board is activated to compensate the second failure, e.g. by a configuration, as explained above, on the basis of a failed board associated to the second failure or by establishing a failed link between boards or connection to the bus.

Otherwise the chain can not be healed without further measures. For a N+1 redundancy, chain maintenance is required, e.g. by replacing failed chain parts. For higher order redundancies, failure healing can be obtained by means of a including a further spare board, as explained above or, in case the current chain includes more than one former spare board, the failure location can be determined in order to check whether the further failure is neighboring one of the former spare boards.

The sequence of determining whether a further failure is a neighboring failure and whether the further failure can be healed by the included board can be reversed. Then, in case the included can not compensate a further failure, the determination of the failure location can be omitted for a N+1 redundancy. For higher order redundancies, the performance assessment followed by the determination of the failure location can be performed with respect to a further former spare board currently included in the chain.

As an example for a N+1 redundancy, the first failure was a failed link between two boards, the spare board was included in the chain to serve as a link, i.e. to provide a transparent data traffic forwarding. If, as second failure, a board adjacent to the failed link fails, the former spare board can compensate the second failure by further activating the same with a data traffic processing functionality previously provided by the board now being failed.

As a further example, the data traffic of two or more neighboring failed boards can be controlled and processed by the former spare board if its performance is sufficient.

For carrying out the enhanced failure healing, the control unit is provided information characterizing the current chain, i.e. its topology (e.g. which boards form the chain, the order of boards in the chain, board functionalities) and information characterizing the current state of the chain (e.g. operation condition of the boards, internal links and external links), e.g. as set forth above. It is noted that a dynamic configuration of the chain (e.g. its current condition after initialization, configuration, start, possible failures and required healing) is used for this process. The static chain configuration is employed is no failure has been healed yet, e.g. for the above failure detection of healing.

Further failure(s) being currently compensated by a board which has been provided as a spare board and is now included in the chain are monitored. In dependence of the failure(s) already healed by the former spare, now included board and the failure last detected it is determined whether the last failure can be healed by the board in question and how it is to be utilized for failure healing.

If a failure occurs it is checked whether the spare board is already busy or not. In the latter case failure related alarms can be forwarded by the spare board or originating there from and will be considered in the fault detection process.

In case the spare board is not included in the chain for failure healing, the failure healing can be performed as described above.

Otherwise, the it is assessed whether the failed chain elements, i.e. previously failed chain element(s) now replaced by the spare board and currently failed chain element(s) last detected, are neighboring elements. In this context, neighboring chain elements include failed boards which are neighbors in the normal chain processing (e.g. neighboring with respect to the data traffic flow through the chain), failed links associated to the same board, failed boards and failed links thereto and combinations thereof.

If the failed elements are not neighboring each other, a complete failure of the chain is determined for a N+1 redundancy. As set forth above higher redundancies allow for further failure healing capabilities.

For neighboring failed chain elements, the spare board is configured to replace the failed elements and its functionalities, at least in an extent that the chain can be further operated. If the last failure to be currently healed is the first failure of a board, the configuration of the failed board is copied to the spare board except for the DXS configuration, as explained before.

For a failure being a further failure of a board, depending on the failure already compensated and the failure to be currently healed, the spare board can be activated to replace all failed boards. If the spare board already included in the chain can not substitute all functions of the failed boards it is still possible to further operate the chain. Here, it is determined which part of the date traffic control and processing should be maintained, e.g. depending from the priorities of the system operator. Then, the spare board is accordingly configured to absorb the respective configuration of the last failed board. For such a configuration is it possible that configurations of the spare board obtained from a previously failed board which has been replaced by the spare board before the occurrence of the last failure are altered to fulfill the data traffic requirements. Advantageously, the spare board absorbs as much as possible of the configuration of the failed board(s).

For the case of a first failure of a link, the spare board is configured to route data traffic for the failed link, e.g. through its VC-4 framers, with a synchronization configuration in view of the data traffic direction through the bus. Here, the DXS configuration can be so as to use the bus.

As a result of the failure healing, data traffic flows through the chain, wherein data traffic processing can be fully restored or reduced in dependence of the failures and the capability of the spare board.

## Claims

1. A method for supporting different data rates in a telecommunications environment, comprising the step of:
- providing at least two boards (B1,...,Bn), each board being capable of supporting a predefined low data rate (E1) via a low data rate interface,
said method being **characterized in that** it further comprises the steps of:
- selecting two or more of the at least two boards cooperatively providing capacities required to support a predefined high data rate (STM-1) for internal data traffic,
- linking the at least two selected boards (B1,...,Bn) to form a chain through which data traffic of a high data rate (STM-1) is to be routed.

2. The method according to claim 1, comprising the steps of:
- providing at least one of the at least two boards (B1,...,Bn) with an interface (LD) supporting the high data rate (STM-1), and
- operating the at least one high data rate interface (LD) for receiving external data traffic having the high data rate (STM-1), the at least one high data rate interface (LD) forming the beginning of the chain.

3. The method according to claim 1 or 2, comprising the steps of:
- providing at least one of the at least two boards (B1,...,Bn) with an interface (LD) supporting the high data rate (STM-1), and
- operating the at least one high data rate interface (LD) for outputting the internal data traffic having the high data rate (STM-1), the at least one high data rate interface (LD) forming the end of the chain.

4. The method according to one of the preceding claims, comprising the step of:
- operating at least one of the low data rate interfaces for at least one of outputting data traffic having the low data rate (E1) obtained from the internal data traffic having the high data rate (STM-1) and receiving external data traffic having the low data rate (E1).

5. The method according to one of the preceding claims, comprising the step of:
- initializing the at least two boards (B1,...,Bn) according to the capacities required for the high data rate (STM-1) to cooperatively support the internal data traffic by the at least two boards (B1,...,Bn).

6. The method according to one of the claims 2 to 5, comprising the step of:
- detecting the at least one high data rate interface (LD) forming least one of the beginning and the end of the chain.

7. The method according to one of the preceding claims, comprising the steps of:
- defining correlations of predefined failures of the chain and alarms generated by the at least two boards (B1,...,Bn),
- receiving at least one alarm from the at least two boards (B1,....Bn), and
- determining a current failure of the chain on the basis of the defined correlations for the at least one alarm.

8. The method according to claim 7, comprising the step of:
- determining the current failure on the basis of the defined correlations by excluding alarms for which no correlations to failures are defined.

9. The method according to claim 7 or 8, comprising the steps of:
- receiving at least one further alarm from the at least two boards (B1,...,Bn) if the at least one alarm is not sufficient to determine the current failure, and
- determining the current failure on the basis of the defined correlations for the at least one alarm and the at least one further alarm.

10. The method according to one of the claims 7 to 9, comprising the steps of:
- defining at least one of the at least two boards (B1,...,Bn) as susceptible to generate at least one further alarm subsequent to the at least one alarm,
- monitoring the at least one of the at least two boards (B1,...,Bn) if the at least one alarm is not sufficient to determine the current failure,
- receiving at least one further alarm from the defined at least one of the at least two boards (B1,...,Bn), and
- determining the current failure on the basis of the defined correlations for the at least one alarm and the at least one further alarm.

11. The method according to one of the preceding claims, comprising the steps of:
- detecting a current failure for the chain,
- determining a failed chain element (B1,...,Bn; FL) associated to the current failure, and
- healing the current failure by at least one of
-- reversing the direction of data traffic flow through the chain,
-- including a further board (B1,...,Bn) in the chain and operating the included further board (B1,...,Bn) to replace the failed chain element (B1,...,Bn; FL), and
-- removing one of the at least two boards (B1,...,Bn) from the chain, the removed board (B1,...,Bn) being the failed chain element (B1,...,Bn; FL), including a further board (B1,...,Bn) in the chain and operating the included further board (B1,...,Bn) to replace the removed board (B1,...,Bn).

12. The method according to claim 11, comprising the steps of:
- detecting a further current failure for the chain, the further current failure being subsequent to the healed current failure,
- determining a further failed chain element (B1,...,Bn; FL) associated to the current failure, and
- healing the further current failure by at least one of
-- including a another further board (B1,...,Bn) in the chain and operating the included another further board (B1,...,Bn) to replace the further failed chain element (B1,...,Bn; FL), and
-- removing another of the at least two boards (B1,...,Bn) from the chain, the another removed board (B1,...,Bn) being the further failed chain element (B1,...,Bn; FL), including a another further board (B1,...,Bn) in the chain and operating the included another further board (B1,...,Bn) to replace the another removed board (B1,...,Bn).

13. The method according to claim 11 or 12, comprising the steps of:
- detecting a further current failure for the chain, the further current failure being subsequent to the healed current failure,
- determining a further failed chain element (B1,...,Bn; FL) associated to the current failure,
- determining a distance of the failed chain element (B1,...,Bn; FL) and the further failed chain element (B1,...,Bn; FL), the distance being defined in view of the arrangement of the at least two boards (B1,...,Bn) in the chain, and
- healing the further current failure if the determined distance is below a predefined measure by at least one of
-- including a another further board (B1,...,Bn) in the chain and operating the included another further board (B1,...,Bn) to replace the further failed chain element (B1,...,Bn; FL), and
-- removing another of the at least two boards (B1,...,Bn) from the chain, the another removed board (B1,...,Bn) being the further failed chain element (B1,...,Bn; FL), including a another further board (B1,...,Bn) in the chain and operating the included another further board (B1,...,Bn) to replace the another removed board (B1,...,Bn).

14. The method according to one of the claims 11 to 13, comprising the step of:
- detecting a current failure for the chain by determining a associated failed chain element (B1,...,Bn; FL) on the basis of alarms from neighboring chain elements (B1,...,Bn; FL).

15. A device for supporting different data rates in a telecommunications environment, comprising at least two boards (B1,...,Bn), each board being capable of supporting a predefined low data rate (E1) via a low data rate interface, said device being **characterized** inb that it comprises:
- means for selecting two or more of the at least two boards cooperatively providing capacities required to support a predefined high data rate (STM-1) for internal data traffic
- means for linking said at least two selected boards (B1,...,Bn) to form a chain through which data traffic of said high data rate (STM-1) is to be routed.

16. The device according to claim 15, wherein at least one of the at least two boards (B1,...,Bn) comprises an interface (LD) supporting the high data rate (STM-1) and the at least one high data rate interface (LD) is arranged for receiving external data traffic having the high data (STM-1), the at least one high data rate interface (LD) forming the beginning of the chain.

17. The device according to claim 15 or 16, wherein at least one of the at least two boards (B1,...,Bn) comprises an interface (LD) supporting the high data rate (STM-1) and the at least one high data rate interface (LD) is arranged for outputting the internal data traffic having the high data (STM-1), the at least one high data rate interface (LD) forming the end of the chain.

18. The device according to one of the claims 15 to 17, wherein at least one of the low data rate interfaces is arranged for at least one of outputting data traffic having the low data rate (E1) obtained from the internal data traffic having the high data rate (STM-1) and receiving external data traffic having the low data (E1).

19. The device according to one of the claims 15 to 18, wherein the at least two boards (B1,...,Bn) are initialized according to the capacities required for the high data rate (STM-1) to cooperatively support the internal data traffic by the at least two boards (B1,...,Bn).

20. The device according to one of the claims 15 to 19, comprising at least one further board (B1,...,Bn) being provided for replacing elements (B1,...,Bn; FL) of the chain associated to a current failure of the chain.

21. The device according to one of the claims 15 to 20, comprising means to carry out the steps according to one of the claims 1 to 14.

22. An interface device for supporting different data rates in a telecommunications environment, the interface device being programmed and adapted to carry out the steps of one of the claims 1 to 14.

23. An interface device for supporting different data rates in a telecommunications environment, the interface device comprising a device according to one of the claims 15 to 21.

24. A telecommunications system employing data traffic of a low data rate and a high data rate, the telecommunications system being programmed and adapted to carry out the steps of one of the claims 1 to 14.

25. A telecommunications system employing data traffic of a low data rate and a high data rate, the telecommunications system comprising a device according to one of the claims 15 to 21.

26. A computer program product, comprising:
- program code portions for carrying out the steps of one of the claims 1 to 14.

27. The computer program product according to claim 26, stored on a computer readable recording medium.

## Patentansprüche

1. Verfahren zur Unterstützung unterschiedlicher Datenraten in einer Telekommunikationsumgebung, das folgenden Schritt umfasst:
- Bereitstellen von mindestens zwei Karten (B1, ..., Bn), die jeweils fähig sind, eine vorgegebene niedrige Datenrate (E1) über eine Schnittstelle mit niedriger Datenrate zu unterstützen,
**dadurch gekennzeichnet, dass** sie folgende weitere Schritte umfasst:
- Auswählen von zwei oder mehr der mindestens zwei Karten, die kooperativ Kapazitäten bereitstellen, welche für eine Unterstützung einer vorgegebenen hohen Datenrate (STM-1) für internen Datenverkehr erforderlich sind; und
- Verbinden der mindestens zwei ausgewählten Karten (B1, ..., Bn) zu einer Kette, durch die Datenverkehr einer hohen Datenrate (STM-1) geleitet werden soll.

2. Verfahren nach Anspruch 1, das folgende Schritte umfasst:
- Ausstatten mindestens einer der mindestens zwei Karten (B1, ..., Bn) mit einer Schnittstelle (LD), welche die hohe Datenrate (STM-1) unterstützt; und
- Betreiben der mindestens einen hochratigen Schnittstelle (LD) zum Empfangen von externem Datenverkehr mit der hohen Datenrate (STM-1), wobei die mindestens eine hochratige Schnittstelle (LD) den Anfang der Kette bildet.

3. Verfahren nach Anspruch 1 oder 2, das folgende Schritte umfasst:
- Ausstatten mindestens einer der mindestens zwei Karten (B1, ..., Bn) mit einer Schnittstelle (LD), welche die hohe Datenrate (STM-1) unterstützt; und
- Betreiben der mindestens einen hochratigen Schnittstelle (LD) zum Ausgeben des internen Datenverkehrs mit der hohen Datenrate (STM-1), wobei die mindestens eine hochratige Schnittstelle (LD) das Ende der Kette bildet.

4. Verfahren nach einem der vorhergehenden Ansprüche, das folgenden Schritt umfasst:
- Betreiben mindestens einer der niedrigratigen Schnittstellen zum Ausgeben von Datenverkehr mit der niedrigen Datenrate (E1), der aus dem internen Datenverkehr mit der hohen Datenrate (STM-1) gebildet wurde, und zum Empfangen von externem Datenverkehr mit der niedrigen Datenrate (E1).

5. Verfahren nach einem der vorhergehenden Ansprüche, das folgenden Schritt umfasst:
- Initialisieren der mindestens zwei Karten (B1, ..., Bn) entsprechend den für die hohe Datenrate (STM-1) erforderlichen Kapazitäten, um den internen Datenverkehr durch die mindestens zwei Karten (B1, ..., Bn) kooperativ zu unterstützen.

6. Verfahren nach einem der Ansprüche 2 bis 5, das folgenden Schritt umfasst:
- Erkennen der mindestens einen hochratigen Datenschnittstelle (LD), die den Anfang und/oder das Ende der Kette bildet.

7. Verfahren nach einem der vorhergehenden Ansprüche, das folgende Schritte umfasst:
- Definieren von Korrelationen von vorgegebenen Ausfällen der Kette und durch die mindestens zwei Karten (B1, ..., Bn) erzeugten Alarmen;
- Empfangen mindestens eines Alarms von den mindestens zwei Karten (B1, ..., Bn); und
- Erkennen eines aktuellen Ausfalls der Kette auf der Basis der definierten Korrelationen für den mindestens einen Alarm.

8. Verfahren nach Anspruch 7, das folgenden Schritt umfasst:
- Erkennen des aktuellen Ausfalls auf der Basis der definierten Korrelationen durch Ausschluss von Alarmen, für die keine Korrelationen mit Ausfällen definiert sind.

9. Verfahren nach Anspruch 7 oder 8, das folgende Schritte umfasst:
- Empfangen mindestens eines weiteren Alarms von den mindestens zwei Karten (B1, ..., Bn), wenn der mindestens eine Alarm zum Erkennen des aktuellen Fehlers nicht ausreicht; und
- Erkennen des aktuellen Fehlers auf der Basis der definierten Korrelationen für den mindestens einen Alarm und den mindestens einen weiteren Alarm.

10. Verfahren nach einem der Ansprüche 7 bis 9, das folgende Schritte umfasst:
- Definieren mindestens einer der mindestens zwei Karten (B1, ..., Bn) als für die Erzeugung mindestens eines weiteren Alarms nach dem mindestens einen Alarm anfällig;
- Überwachen der mindestens einen der mindestens zwei Karten (B1, ..., Bn), wenn der mindestens eine Alarm zum Erkennen des aktuellen Ausfalls nicht ausreicht;
- Empfangen mindestens eines weiteren Alarms von der definierten mindestens einen der mindestens zwei Karten (B1, ..., Bn); und
- Erkennen des aktuellen Ausfalls auf der Basis der definierten Korrelationen für den mindestens einen Alarm und den mindestens einen weiteren Alarm.

11. Verfahren nach einem der vorhergehenden Ansprüche, das folgende Schritte umfasst:
- Erkennen eines aktuellen Ausfalls für die Kette;
- Ermitteln eines dem aktuellen Ausfall zugeordneten ausgefallenen Kettenelements (B1, ..., Bn; FL); und
- Heilen des aktuellen Ausfalls durch mindestens eine der folgenden Maßnahmen:
-- Umkehren der Richtung des Datenverkehrsflusses durch die Kette;
-- Aufnehmen einer weiteren Karte (B1, ..., Bn) in die Kette und Betreiben der aufgenommenen weiteren Karte (B1, ..., Bn) in der Weise, dass sie das ausgefallene Kettenelement (B1, ..., Bn; FL) ersetzt; und
-- Entfernen einer mindestens zwei Karten (B1, ..., Bn) aus der Kette, wobei die entfernte Karte (B1, ..., Bn) das ausgefallene Kettenelement (B1, ..., Bn; FL) ist, Aufnehmen einer weiteren Karte (B1, ..., Bn) in die Kette und Betreiben der aufgenommenen weiteren Karte (B1, ..., Bn) in der Weise, dass sie die entfernte Karte (B1, ..., Bn) ersetzt.

12. Verfahren nach Anspruch 11, das folgende Schritte umfasst:
- Erkennen eines weiteren aktuellen Ausfalls für die Kette, der nach dem geheilten aktuellen Ausfall auftritt;
- Ermitteln eines weiteren dem aktuellen Ausfall zugeordneten ausgefallenen Kettenelements (B1, ..., Bn; FL); und
- Heilen des weiteren aktuellen Ausfalls durch mindestens eine der folgenden Maßnahmen:
-- Aufnehmen einer zusätzlichen weiteren Karte (B1, ..., Bn) in die Kette und Betreiben der aufgenommenen zusätzlichen weiteren Karte (B1, ..., Bn) in der Weise, dass sie das weitere ausgefallene Kettenelement (B1, ..., Bn; FL) ersetzt; und
-- Entfernen einer zusätzlichen der mindestens zwei Karten (B1, ..., Bn) aus der Kette, wobei die zusätzliche entfernte Karte (B1, ..., Bn) das weitere ausgefallene Kettenelement (B1, ..., Bn; FL) ist, Aufnehmen einer zusätzlichen weiteren Karte (B1, ..., Bn) in die Kette und Betreiben der aufgenommenen zusätzlichen weiteren Karte (B1, ..., Bn) in der Weise, dass sie die zusätzliche entfernte Karte (B1, ..., Bn) ersetzt.

13. Verfahren nach Anspruch 11 oder 12, das folgende Schritte umfasst:
- Erkennen eines weiteren aktuellen Ausfalls für die Kette, der nach dem geheilten aktuellen Ausfall auftritt;
- Ermitteln eines weiteren dem aktuellen Ausfall zugeordneten ausgefallenen Kettenelements (B1, ..., Bn; FL);
- Bestimmen eines Abstands zwischen dem ausgefallenen Kettenelement (B1, ..., Bn; FL) und dem weiteren ausgefallenen Kettenelement (B1, ..., Bn; FL), wobei der Abstand durch die Anordnung der mindestens zwei Karten (B1, ..., Bn) in der Kette definiert ist; und
- wenn der bestimmte Abstand unter einem vorgegebenen Wert liegt, Heilen des weiteren aktuellen Ausfalls durch mindestens eine der folgenden Maßnahmen:
-- Aufnehmen einer zusätzlichen weiteren Karte (B1, ..., Bn) in die Kette und Betreiben der aufgenommenen zusätzlichen weiteren Karte (B1, ..., Bn), in der Weise, dass sie das weitere ausgefallene Kettenelement (B1, ..., Bn; FL) ersetzt; und
-- Entfernen einer zusätzlichen der mindestens zwei Karten (B1, ..., Bn) aus der Kette, wobei die zusätzliche entfernte Karte (B1, ..., Bn) das weitere ausgefallene Kettenelement (B1, ..., Bn; FL) ist, Aufnehmen einer zusätzlichen weiteren Karte (B1, ..., Bn) in die Kette und Betreiben der aufgenommenen zusätzlichen weiteren Karte (B1, ..., Bn) in der Weise, dass sie die zusätzliche entfernte Karte (B1, ..., Bn) ersetzt.

14. Verfahren nach einem der Ansprüche 11 bis 13, das folgenden Schritt umfasst:
- Erkennen eines aktuellen Ausfalls für die Kette durch Ermittlung eines zugeordneten ausgefallenen Kettenelements (B1, ..., Bn; FL) auf der Basis von Alarmen von benachbarten Kettenelementen (B1, ..., Bn; FL).

15. Einrichtung zur Unterstützung von unterschiedlichen Datenraten in einer Telekommunikationsumgebung, welche Einrichtung mindestens zwei Karten (B1, ..., Bn) umfasst, die jeweils fähig sind, eine vorgegebne niedrige Datenrate (E1) über eine niedrigratige Schnittstelle zu unterstützen,
**dadurch gekennzeichnet, dass** sie umfasst:
- Mittel zum Auswählen von zwei oder mehr der mindestens zwei Karten, die kooperativ Kapazitäten bereitstellen, welche für eine Unterstützung einer vorgegebenen hohen Datenrate (STM-1) für internen Datenverkehr erforderlich sind; und
- Mittel zum Verbinden der mindestens zwei ausgewählten Karten (B1, ..., Bn) zu einer Kette, durch die Datenverkehr der hohen Datenrate (STM-1) geleitet werden soll.

16. Einrichtung nach Anspruch 15, bei der mindestens eine der mindestens zwei Karten (B1, ..., Bn) eine die hohe Datenrate (STM-1) unterstützende Schnittstelle (LD) umfasst und die mindestens eine hochratige Schnittstelle (LD) zum Empfang von externem Datenverkehr mit der hohen Datenrate (STM-1) angeordnet ist, wobei die mindestens eine hochratige Schnittstelle (LD) den Anfang der Kette bildet.

17. Einrichtung nach Anspruch 15 oder 16, bei der mindestens eine der mindestens zwei Karten (B1, ..., Bn) eine die hohe Datenrate (STM-1) unterstützende Schnittstelle (LD) umfasst und die mindestens eine hochratige Schnittstelle (LD) zur Ausgabe des internen Datenverkehrs mit der hohen Datenrate (STM-1) angeordnet ist, wobei die mindestens eine hochratige Schnittstelle (LD) das Ende der Kette bildet.

18. Einrichtung nach einem der Ansprüche 15 bis 17, bei der mindestens eine der niedrigratigen Schnittstellen zur Ausgabe von Datenverkehr mit der niedrigen Datenrate (E1), der aus dem internen Datenverkehr mit der hohen Datenrate (STM-1) gebildet wurde, und/oder zum Empfang von externem Datenverkehr mit der niedrigen Datenrate (E1) angeordnet ist.

19. Einrichtung nach einem der Ansprüche 15 bis 18, bei der die mindestens zwei Karten (B1, ..., Bn) entsprechend den für die hohe Datenrate (STM-1) erforderlichen Kapazitäten initialisiert werden, um den internen Datenverkehr mittels der mindestens zwei Karten (B1, ..., Bn) zu unterstützen.

20. Einrichtung nach einem der Ansprüche 15 bis 19, die mindestens eine weitere Karte (B1, ..., Bn) umfasst, welche als Ersatz für Elemente (B1, ..., Bn; FL) der Kette vorgesehen ist, die einem aktuellen Ausfall der Kette zugeordnet sind.

21. Einrichtung nach einem der Ansprüche 15 bis 20, die Mittel zum Durchführen der Schritte nach einem der Ansprüche 1 bis 14 umfasst.

22. Schnittstelleneinrichtung zur Unterstützung unterschiedlicher Datenraten in einer Telekommunikationsumgebung, die für eine Durchführung der Schritte nach einem der Ansprüche 1 bis 14 programmiert und ausgelegt ist.

23. Schnittstelleneinrichtung zur Unterstützung unterschiedlicher Datenraten in einer Telekommunikationsumgebung und mit einer Einrichtung nach einem der Ansprüche 15 bis 21.

24. Telekommunikationssystem mit Datenverkehr einer niedrigen Datenrate und einer hohen Datenrate, das für eine Durchführung der Schritte nach einem der Ansprüche 1 bis 14 programmiert und ausgelegt ist.

25. Telekommunikationssystem mit Datenverkehr einer niedrigen Datenrate und einer hohen Datenrate, das eine Einrichtung nach einem der Ansprüche 15 bis 21 umfasst.

26. Computerprogramm-Produkt, umfassend:
- Programmcodeteile zum Durchführen der Schritte nach einem der Ansprüche 1 bis 14.

27. Computerprogramm-Produkt nach Anspruch 26, gespeichert auf einem maschinenlesbaren Datenträger.

## Revendications

1. Procédé destiné à supporter différents débits de données dans un environnement de télécommunications, comprenant les étapes consistant à :
- fournir au moins deux cartes (B1, ...., Bn), chaque carte étant capable de supporter un débit de données bas prédéfini (E1) via une interface de débit de données bas,
ledit procédé étant **caractérisé en ce qu'**il comprend, en outre, les étapes consistant à :
- choisir deux cartes ou plus parmi lesdites au moins deux cartes fournissant en coopération les capacités requises pour supporter un débit de données élevé prédéfini (STM-1) pour le trafic de données interne,
- lier lesdites au moins deux cartes choisies (B1, ...., Bn) pour former une chaîne à travers laquelle le trafic de données d'un débit de données élevé (STM-1) doit être acheminé.

2. Procédé selon la revendication 1, comprenant les étapes consistant à :
- fournir à au moins l'une des au moins deux cartes (B1, ...., Bn) une interface (LD) supportant le débit de données élevé (STM-1), et
- faire fonctionner ladite au moins une interface de débit de données élevé (LD) pour recevoir le trafic de données externe ayant le débit de données élevé (STM-1), la au moins une interface de débit de données élevé (LD) formant le début de la chaîne.

3. Procédé selon la revendication 1 ou 2, comprenant les étapes consistant à :
- fournir à au moins l'une des au moins deux cartes (B1, ...., Bn) une interface (LD) supportant le débit de données élevé (STM-1), et
- faire fonctionner ladite au moins une interface de débit de données élevé (LD) pour sortir le trafic de données interne ayant le débit de données élevé (STM-1), la au moins une interface de débit de données élevé (LD) formant la fin de la chaîne.

4. Procédé selon l'une quelconque des revendications précédentes, comprenant l'étape consistant à :
- faire fonctionner au moins l'une des interfaces de débit de données bas pour effectuer au moins l'une des actions consistant à sortir le trafic de données ayant le débit de données bas (E1) obtenu à partir du trafic de données interne ayant le débit de données élevé (STM-1) et à recevoir le trafic de données externe ayant le débit de données bas (E1).

5. Procédé selon l'une quelconque des revendications précédentes, comprenant l'étape consistant à :
- initialiser les au moins deux cartes (B1, ...., Bn) selon les capacités requises pour le débit de données élevé (STM-1) pour supporter en coopération le trafic de données interne au moyen des au moins deux cartes (B1, ...., Bn).

6. Procédé selon l'une quelconque des revendications 2 à 5, comprenant l'étape consistant à :
- détecter la au moins une interface de débit de données élevé (LD) formant au moins soit le début, soit la fin de la chaîne.

7. Procédé selon l'une quelconque des revendications précédentes, comprenant les étapes consistant à :
- définir les corrélations des pannes prédéfinies de la chaîne et les alarmes générées par les au moins deux cartes (B1, ...., Bn),
- recevoir au moins une alarme en provenance des au moins deux cartes (B1, ...., Bn), et
- déterminer une panne actuelle de la chaîne sur la base des corrélations définies pour la au moins une alarme.

8. Procédé selon la revendication 7, comprenant l'étape consistant à :
- déterminer la panne actuelle sur la base des corrélations définies en excluant les alarmes pour lesquelles aucune corrélation aux pannes n'est définie.

9. Procédé selon la revendication 7 ou 8, comprenant les étapes consistant à :
- recevoir au moins une alarme supplémentaire en provenance des au moins deux cartes (B1, ...., Bn) si la au moins une alarme n'est pas suffisante pour déterminer la panne actuelle, et
- déterminer la panne actuelle sur la base des corrélations définies pour la au moins une alarme et la au moins une alarme supplémentaire.

10. Procédé selon l'une quelconque des revendications 7 à 9, comprenant les étapes consistant à :
- définir au moins l'une des au moins deux cartes (B1, ...., Bn) comme étant susceptible de générer au moins une alarme supplémentaire suite à la au moins une alarme,
- surveiller la au moins une des au moins deux cartes (B1, ...., Bn) si la au moins une alarme n'est pas suffisante pour déterminer la panne actuelle,
- recevoir au moins une alarme supplémentaire en provenance de la au moins une carte définie parmi les au moins deux cartes (B1, ...., Bn), et
- déterminer la panne actuelle sur la base des corrélations définies pour la au moins une alarme et la au moins une alarme supplémentaire.

11. Procédé selon l'une quelconque des revendications précédentes, comprenant les étapes consistant à :
- détecter une panne actuelle pour la chaîne,
- déterminer un élément de chaîne défectueux (B1, ...., Bn ; FL) associé à la panne actuelle, et
- rétablir la panne actuelle en procédant à au moins l'une des actions suivantes
- inverser la direction du flux de trafic de données à travers la chaîne,
- inclure une carte supplémentaire (B1, ...., Bn) dans la chaîne et faire fonctionner la carte supplémentaire incluse (B1, ...., Bn) pour remplacer l'élément de chaîne défectueux (B1, ...., Bn ; FL), et
- retirer l'une des au moins deux cartes (B1, ...., Bn) de la chaîne, la carte retirée (B1, ...., Bn) étant l'élément de chaîne défectueux (B1, ...., Bn ; FL), à inclure une autre carte (B1, ...., Bn) dans la chaîne et à faire fonctionner la carte supplémentaire incluse (B1, ...., Bn) pour remplacer la carte retirée (B1, ...., Bn).

12. Procédé selon la revendication 11, comprenant les étapes consistant à :
- détecter une panne actuelle supplémentaire pour la chaîne, ladite panne actuelle supplémentaire suivant la panne actuelle rétablie,
- déterminer un élément de chaîne défectueux supplémentaire (B1, ...., Bn ; FL) associé à la panne actuelle, et
- rétablir la panne actuelle supplémentaire par au moins l'une des actions consistant à
- inclure une autre carte supplémentaire (B1, ...., Bn) dans la chaîne et faire fonctionner l'autre carte supplémentaire incluse (B1, ...., Bn) pour remplacer l'élément de chaîne défectueux supplémentaire (B1, ...., Bn ; FL), et
- retirer une autre des au moins deux cartes (B1, ...., Bn) de la chaîne, l'autre carte supprimée (B1, ...., Bn) étant l'élément de chaîne défectueux supplémentaire (B1, ...., Bn ; FL), comprenant une autre carte supplémentaire (B1, ...., Bn) dans la chaîne et faire fonctionner l'autre carte supplémentaire incluse (B1, ...., Bn) pour remplacer l'autre carte retirée (B1, ...., Bn).

13. Procédé selon la revendication 11 ou 12, comprenant les étapes consistant à :
- détecter une panne actuelle supplémentaire pour la chaîne, la panne actuelle supplémentaire suivant la panne actuelle rétablie,
- déterminer un élément de chaîne défectueux supplémentaire (B1, ...., Bn ; FL) associé à la panne actuelle,
- déterminer une distance entre l'élément de chaîne défectueux (B1, ...., Bn ; FL) et l'élément de chaîne défectueux supplémentaire (B1, ...., Bn ; FL), la distance étant définie en fonction de l'agencement des au moins deux cartes (B1, ...., Bn) de la chaîne, et
- rétablir la panne actuelle supplémentaire si la distance déterminée est inférieure à une mesure prédéfinie en effectuant au moins l'une des actions suivantes
- inclure une autre carte supplémentaire (B1, ...., Bn) dans la chaîne et faire fonctionner l'autre carte supplémentaire incluse (B1, ...., Bn) pour remplacer l'élément de chaîne défectueux supplémentaire (B1, ...., Bn ; FL), et
- supprimer une autre des au moins deux cartes (B1, ...., Bn) de la chaîne, l'autre carte supprimée (B1, ...., Bn) étant l'élément de chaîne défectueux supplémentaire (B1, ...., Bn ; FL), inclure une autre carte supplémentaire (B1, ...., Bn) dans la chaîne et faire fonctionner l'autre carte supplémentaire incluse (B1, ...., Bn) pour remplacer l'autre carte retirée (B1, ...., Bn).

14. Procédé selon l'une quelconque des revendications 11 à 13, comprenant l'étape consistant à :
- détecter une panne actuelle pour la chaîne en déterminant un élément de chaîne défectueux associé (B1, ...., Bn ; FL) sur la base d'alarmes en provenance d'éléments de chaîne avoisinants (B1, ...., Bn ; FL).

15. Dispositif destiné à supporter différents débits de données dans un environnement de télécommunications, comprenant au moins deux cartes (B1, ...., Bn), chaque carte étant capable de supporter un débit de données bas prédéfini (E1) via une interface de débit de données bas, ledit dispositif étant **caractérisé en ce qu'**il comprend :
- un moyen pour choisir deux cartes ou plus parmi les au moins deux cartes fournissant en coopération les capacités requises pour supporter un débit de données élevé prédéfini (STM-1) pour le trafic de données interne,
- un moyen de lier lesdites au moins deux cartes choisies (B1, ...., Bn) pour former une chaîne à travers laquelle le trafic de données dudit débit de données élevé (STM-1) doit être acheminé.

16. Dispositif selon la revendication 15, dans lequel au moins l'une des au moins deux cartes (B1, ...., Bn) comprend une interface (LD) supportant le débit de données élevé (STM-1) et dans lequel la au moins une interface de débit de données élevé (LD) est agencée pour recevoir le trafic de données externe ayant le débit de données élevé (STM-1), la au moins une interface de débit de données élevé (LD) formant le début de la chaîne.

17. Dispositif selon la revendication 15 ou 16, dans lequel au moins l'une des au moins deux cartes (B1, ...., Bn) comprend une interface (LD) supportant le débit de données élevé (STM-1) et dans lequel la au moins une interface de débit de données élevé (LD) est agencée pour sortir le trafic de données interne ayant le débit de données élevé (STM-1), la au moins une interface de débit de données élevé (LD) formant la fin de la chaîne.

18. Dispositif selon l'une quelconque des revendications 15 à 17, dans lequel au moins l'une des interfaces de débit de données bas est agencée pour effectuer au moins l'une des actions consistant à sortir le trafic de données ayant le débit de données bas (E1) obtenu à partir du trafic de données interne ayant le débit de données élevé (STM-1) et à recevoir le trafic de données externe ayant le débit de données bas (E1).

19. Dispositif selon l'une quelconque des revendications 15 à 18, dans lequel les au moins deux cartes (B1, ...., Bn) sont initialisées selon les capacités requises pour le débit de données élevé (STM-1) pour supporter en coopération le trafic de données interne au moyen des au moins deux cartes (B1, ...., Bn).

20. Dispositif selon l'une quelconque des revendications 15 à 19, comprenant au moins une carte supplémentaire (B1, ...., Bn) étant fournie pour remplacer les éléments (B1, ...., Bn ; FL) de la chaîne associés à une panne actuelle de la chaîne.

21. Dispositif selon l'une quelconque des revendications 15 à 20, comprenant un moyen d'effectuer les étapes selon l'une quelconque des revendications 1 à 14.

22. Dispositif d'interface destiné à supporter différents débits de données dans un environnement de télécommunications, le dispositif d'interface étant programmé et adapté pour effectuer les étapes de l'une quelconque des revendications 1 à 14.

23. Dispositif d'interface destiné à supporter différents débits de données dans un environnement de télécommunications, le dispositif d'interface comprenant un dispositif selon l'une quelconque des revendications 15 à 21.

24. Système de télécommunication employant le trafic de données d'un débit de données bas et d'un débit de données élevé, le système de télécommunications étant programmé et adapté pour exécuter les étapes selon l'une quelconque des revendications 1 à 14.

25. Système de télécommunication employant le trafic de données d'un débit de données bas et d'un débit de données élevé, le système de télécommunications comprenant un dispositif selon l'une quelconque des revendications 15 à 21.

26. Produit de programme informatique comprenant :
- des parties de code de programme destinées à exécuter les étapes selon l'une quelconque des revendications 1 à 14.

27. Produit de programme informatique selon la revendication 26, stocké sur un support d'enregistrement lisible sur ordinateur.
